# EUROPÄISCHE PATENTANMELDUNG

(11) **EP 3 403 911 A1**
(43) Veröffentlichungstag der Anmeldung: **21.11.2018**
(21) Anmeldenummer: 18171419.7
(22) Anmeldetag: 09.05.2018
(51) Int. Cl.: B62L 1/00, B62L 3/02, B60T 8/171, B60T 8/32, B62J 99/00

(54) **RADEINHEIT FÜR EIN FAHRZEUG**

(30) Priorität: 19.05.2017 DE 102017110946
(71) Anmelder: Gustav Magenwirth GmbH & Co. KG, 72574 Bad Urach (DE)
(72) Erfinder: Ruopp, Michael, 89180 Berghülen (DE)
(74) Vertreter: Hoeger, Stellrecht & Partner Patentanwälte mbB

(57) **Zusammenfassung**

Um eine Radeinheit insbesondere für ein Fahrzeug, umfassend ein Rad mit einer Nabe und einer Felge, welche durch Speichen miteinander verbunden und um eine Drehachse drehbar angeordnet sind, zu verbessern wird vorgeschlagen, dass mit dem Rad eine koaxial zu der Drehachse angeordnete Scheibeneinheit verbunden ist, die einen Bremsring für eine Scheibenbremse und einen Sensorkranz zur Erfassung einer Drehbewegung der Radeinheit trägt.

## Beschreibung

Die Erfindung betrifft eine Radeinheit für ein Fahrzeug, insbesondere für ein Zweirad, vorzugsweise ein Fahrrad, umfassend ein Rad mit einer Nabe und einer Felge, welche durch Speichen miteinander verbunden und um eine Drehachse drehbar angeordnet sind.

Derartige Radeinheiten, insbesondere für Fahrräder, sind aus dem Stand der Technik bekannt, wobei beispielsweise Zweiräder, insbesondere Fahrräder, eine vordere Radeinheit und eine hintere Radeinheit aufweisen und die Radeinheiten miteinander durch einen Rahmen verbunden sind.

Im Zusammenhang mit der nachfolgenden Beschreibung ist unter einem Fahrrad ein Fahrzeug zu verstehen, welches entweder nur durch die Muskelkraft eines Fahrers angetrieben wird oder durch die Muskelkraft eines Fahrers angetrieben werden kann und einen Zusatzantrieb umfasst, der insbesondere abgasfrei, beispielsweise ohne CO₂ Ausstoß, arbeitet, wobei der Zusatzantrieb insbesondere den Antrieb durch die menschliche Muskelkraft ergänzt und/oder, beispielsweise phasenweise bei für den Fahrer anstrengenden Fahrabschnitten, ersetzt.

Der Zusatzantrieb umfasst insbesondere einen elektrischen Antriebsmotor der vorzugsweise aus einem Stromspeicher oder aus einer Brennstoffzelle mit elektrischer Energie gespeist wird, so dass beispielsweise der Zusatzantrieb keine fossilen Brennstoffe benötigt.

Somit umfasst der Begriff Fahrrad im nachfolgend verwendeten Sinn insbesondere Fahrräder, die durch die Muskelkraft des Fahrers antreibbar sind, sowie Fahrräder, welche beispielsweise durch die Muskelkraft des Fahrers antreibbar sind, und mit einem dauernd wirkenden oder zuschaltbaren Zusatzantrieb, beispielsweise E-Bikes und Pedelecs, angetrieben sind.

Insbesondere erreichen derartige Fahrzeuge, insbesondere Zweiräder, Höchstgeschwindigkeiten von höchstens 100 Kilometer pro Stunde, beispielsweise von höchstens 80 Kilometer pro Stunde, insbesondere höchstens 60 Kilometer pro Stunde und vorzugsweise höchstens 40 Kilometer pro Stunde.

Somit ist ein Zweirad und somit insbesondere auch die Radeinheit für das Zweirad, insbesondere das Fahrrad in Leichtbauweise für eine derartige Höchstgeschwindigkeit ausgelegt.

Außerdem sind Zweiräder, insbesondere Fahrräder, im nachfolgend verwendeten Sinne leichte Fahrzeuge mit einem Gewicht von beispielsweise höchstens 100 Kilogramm, insbesondere höchstens 80 Kilogramm, in besonders zweckmäßigerweise höchstens 50 Kilogramm, insbesondere höchstens 30 Kilogramm, so dass die Radeinheit des Fahrrads für eine Belastung mit einem derartigen Höchstgewicht plus dem Gewicht des Fahrers ausgelegt ist.

Der Erfindung liegt die Aufgabe zugrunde, eine gattungsgemäße Radeinheit für ein Fahrzeug, insbesondere ein Zweirad, vorzugsweise ein Fahrrad, zu verbessern.

Diese Aufgabe wird bei einer Radeinheit der eingangs beschriebenen Art erfindungsgemäß dadurch gelöst, dass mit dem Rad eine koaxial zu der Drehachse angeordnete Scheibeneinheit verbunden ist, die einen Bremsring für eine Scheibenbremse und einen Sensorkranz zur Erfassung einer Drehbewegung der Radeinheit trägt.

Der Vorteil der erfindungsgemäßen Lösung ist darin zu sehen, dass durch die an der Radeinheit vorgesehene Scheibeneinheit sowohl eine Scheibenbremse realisierbar ist als auch eine Erfassung der Drehbewegung der Radeinheit, die insbesondere zur Drehzahlerfassung und beispielsweise zum Betrieb eines Antiblockiersystems geeignet ist.

Besonders günstig ist es dabei, wenn der Sensorkranz und der Bremsring in der Scheibeneinheit derart relativ zueinander angeordnet sind, dass deren Mittelebenen, in denen sich diese erstrecken, parallel zueinander verlaufen, und insbesondere dicht nebeneinander verlaufen.

Das heißt, dass dadurch in Richtung quer zu den Mittelebenen eine sehr schmale und raumsparende Bauweise der Scheibeneinheit realisierbar ist, die, insbesondere für den Einsatz bei einem Fahrrad, von großem Vorteil ist.

Noch vorteilhafter ist es, wenn der Sensorkranz und der Bremsring in der Scheibeneinheit derart relativ zueinander angeordnet sind, dass die Mittelebenen, in denen sich diese erstrecken, zusammenfallen, so dass dadurch eine Bauweise der Scheibeneinheit erreicht ist, die in ihrer Ausdehnung quer zu den Mittelebenen der Querausdehnung eines Bremsrings für eine Scheibenbremse entspricht und somit ein Maximum an Raumersparnis bietet.

Hinsichtlich der Anordnung des Sensorkranzes wurden im Zusammenhang mit der bisherigen Erläuterung der erfindungsgemäßen Lösung keine näheren Angaben gemacht.

Wie vorzugsweise vorgesehen, dass der Sensorkranz radial innerhalb des Bremsrings liegt, so dass stets der Bremsring in einfacher Weise durch eine Bremszange erfasst und gebremst werden kann.

Eine besonders günstige Lösung sieht vor, dass die Scheibeneinheit eine den Sensorkranz umfassende Sensorscheibe umfasst, welche mit dem Rad verbunden ist und welche den Bremsring trägt.

Der Vorteil dieser Lösung ist somit darin zu sehen, dass die Sensorscheibe einen Träger für den Bremsring darstellt und somit keine Bremsscheibe mehr als solche notwendig ist, sondern lediglich der Bremsring erforderlich ist, der von der Sensorscheibe getragen wird.

Dies schafft auch zusätzliche Freiheitsgrade hinsichtlich der Materialauswahl für die Sensorscheibe und den Bremsring, da der Bremsring hinsichtlich der Oberflächeneigenschaften für die Bremsfunktion optimiert werden kann, während das Material für die den Bremsring tragende Sensorscheibe hiervon unbeeinflusst ausgewählt und optimiert werden kann.

Hinsichtlich der Verbindung zwischen dem Bremsring und der Sensorscheibe wurden bislang keine näheren Angaben gemacht.

So sieht eine vorteilhafte Lösung vor, dass der Bremsring durch eine Formschlussverbindung mit der Sensorscheibe verbunden ist.

Dabei kann die Formschlussverbindung in unterschiedlichster Art und Weise ausgebildet sein.

Es können beispielsweise an die Sensorscheibe und den Bremsring angeformte Formschlusselemente ineinander greifen.

Eine andere vorteilhafte Lösung sieht vor, dass die Formschlussverbindung als Nietverbindung oder Schraubverbindung ausgebildet ist.

Besonders günstig ist es, wenn die Formschlussverbindung eine parallel zu einer Mittelebene der Sensorscheibe verlaufende und begrenzte Relativbewegung des Bremsrings zur Sensorscheibe zulässt.

Diese Lösung hat den großen Vorteil, dass beispielsweise ein Temperaturanstieg im Bremsring aufgrund des Bremsens und somit eine Materialausdehnung durch die zugelassene begrenzte Relativbewegung des Bremsrings zur Sensorscheibe zumindest teilweise durch die zulässige Relativbewegung aufgenommen werden kann, so dass sich diese Deformation des Bremsrings nicht oder nicht wesentlich auf die Sensorscheibe auswirkt.

Hinsichtlich der Art der Verbindung des Bremsrings mit der Sensorscheibe wurden bislang keine näheren Angaben gemacht.

So ist vorzugsweise vorgesehen, dass der Bremsring durch Halteansätze, welche in Ausnehmungen eingreifen, mit der Sensorscheibe verbunden ist.

Hierzu ist beispielsweise eines der Halteansätze an dem Bremsring und die entsprechende Ausnehmung an der Sensorscheibe angeordnet oder umgekehrt.

Diese Lösung ist relativ einfach zu realisieren und gewährt eine ausreichend gute Stabilität.

Bei dem Vorsehen von Halteansätzen und Ausnehmungen ist vorzugsweise vorgesehen, dass die Ausnehmungen und die Halteansätze als in Drehrichtung wirksame Formschlusselemente zur drehfesten Verbindung des Bremsrings mit der Sensorscheibe dienen, so dass die beim Bremsen auftretende Kraftübertragung von dem Bremsring auf die Nabe über die Ausnehmungen und die Halteansätze erfolgt.

Dies ist insbesondere von Vorteil, wenn die Ausnehmungen und Halteansätze sich in derselben Mittelebene erstrecken.

Hinsichtlich der Anordnung der Halteansätze und Ausnehmungen wurden bislang keine näheren Angaben gemacht.

So sieht eine vorteilhafte Lösung vor, dass die Halteansätze und Ausnehmungen radial zwischen der Sensorscheibe und dem Bremsring liegend angeordnet sind.

Insbesondere ist vorzugsweise vorgesehen, dass die jeweilige Ausnehmung mit dem jeweiligen Halteansatz drehfest verbindende Formschlussflächen radial außerhalb des Sensorkranzes liegen, so dass die Ausbildung des Sensorkranzes hiervon unbeeinträchtigt ist.

Ferner ist vorzugsweise vorgesehen, dass die die Ausnehmung und den jeweiligen Halteansatz drehfest verbindenden Formschlussflächen radial zwischen dem Sensorkranz und dem Bremsring liegen.

Eine andere vorteilhafte Lösung sieht vor, dass die jeweilige Ausnehmung und der jeweils mit dieser zusammenwirkende Halteansatz sich in einen Abtastbereich des Sensorkranzes hinein erstrecken.

Insbesondere ist dabei vorgesehen, dass sich in dem sich in den Abtastbereich hineinerstreckenden Teil des Halteansatzes die periodische Struktur des Abtastbereichs fortsetzt.

Hinsichtlich der Verbindung der Sensorscheibe mit der Nabe wurden bislang keine näheren Angaben gemacht.

Die Sensorscheibe ist bei einer Ausführungsform mit der Felge verbunden.

Eine vorteilhafte Lösung sieht vor, dass die Sensorscheibe mit einer Nabe des Rades verbunden ist.

So sieht eine vorteilhafte Lösung vor, dass die Sensorscheibe formschlüssig mit der Nabe verbunden ist.

Vorzugsweise ist dabei die Sensorscheibe an einem auf die Nabe aufgesteckten und durch Formschluss drehfest mit der Nabe verbundenen Tragring gehalten.

Alternativ zu der bislang beschriebenen Lösung, bei welcher eine Sensorscheibe den Bremsring trägt, sieht eine weitere Lösung vor, dass die Scheibeneinheit eine den Bremsring umfassende Bremsscheibe aufweist, welche mit dem Rad verbunden ist, und dass der Sensorkranz an der Bremsscheibe gehalten ist.

Bei diesem Ausführungsbeispiel ist somit der Sensorkranz selbst an der Bremsscheibe montiert und liegt insbesondere an dieser an.

Dabei ist vorzugsweise vorgesehen, dass der Sensorkranz durch Formschlusselemente mit der Bremsscheibe verbunden ist.

Die Verbindung mit dem Rad kann dabei in unterschiedlichster Art und Weise erfolgen.

Eine vorteilhafte Lösung sieht vor, dass die Bremsscheibe formschlüssig mit dem Rad verbunden ist.

Auch die Bremsscheibe ist bei einer Ausführungsform mit der Felge verbunden.

Vorzugsweise ist vorgesehen, dass die Bremsscheibe mit der Nabe verbunden ist.

Zweckmäßigerweise sind die den Sensorkranz mit der Bremsscheibe verbindenden Formschlusselemente radial außerhalb einer Verbindung der Bremsscheibe mit der Nabe angeordnet, so dass diese Verbindung zwischen dem Sensorkranz und der Bremsscheibe lediglich so dimensioniert sein muss, dass der Sensorkranz zuverlässig an der Bremsscheibe fixiert ist, jedoch von keinerlei mechanischen Belastungen der Bremsscheibe beeinflusst ist.

Die Verbindung könnte beispielsweise durch eine Schraub- oder Nietverbindung zwischen der Bremsscheibe und der Nabe erfolgen, welche die zwischen der Bremsscheibe und der Nabe wirkenden Kräfte aufnimmt.

Eine andere vorteilhafte Lösung sieht vor, dass die Bremsscheibe an einem auf die Nabe aufgesteckten und durch Formschluss drehfest mit der Nabe verbundenen Tragring gehalten ist, so dass die Verbindung zwischen der Bremsscheibe und der Nabe über den Tragring erfolgt.

Im Zusammenhang mit der bisherigen Erläuterung der einzelnen Ausführungsbeispiele wurde nicht näher auf die Verbindung zwischen der Nabe und der Radeinheit eingegangen.

Vorzugsweise ist dabei vorgesehen, dass die Nabe um eine Drehachse drehbar an einer Radaufhängung der Radeinheit angeordnet ist.

Zum Erfassen des Sensorkranzes, insbesondere eines Abtastbereichs desselben, ist vorzugsweise vorgesehen, dass der Radeinheit ein Sensor zum Detektieren eines Abtastbereichs des Sensorkranzes zugeordnet ist.

Vorzugsweise ist dabei der Sensor an der Radaufhängung angeordnet.

Mit einem derartigen Sensor lässt sich für die unterschiedlichsten Anwendungsfälle die Drehbewegung des Rades relativ zur Radaufhängung erfassen.

Darüber hinaus ist vorzugsweise vorgesehen, dass die Radeinheit eine Bremszange umfasst, welche mit dem Bremsring beim Bremsen zusammenwirkt.

Dabei kann die Bremszange unterschiedlich betätigbar sein.

Besonders vorteilhaft ist es, wenn die Bremszange eine Nehmereinheit eines Bremssystems, beispielsweise eines hydraulischen Bremssystems, darstellt.

Um den Sensor vorteilhaft relativ zur Bremszange anzuordnen, ist vorzugsweise vorgesehen, dass der Sensor mit der Bremszange verbunden angeordnet ist.

Besonders günstig ist die Lösung dann, wenn die Bremszange ihrerseits an der Radaufhängung angeordnet ist.

Darüber hinaus betrifft die Erfindung ein Fahrzeug, insbesondere ein Fahrrad, umfassend eine vordere Radeinheit und eine hintere Radeinheit, welche durch einen Rahmen miteinander verbunden sind.

Erfindungsgemäß ist dabei vorgesehen, dass mindestens eine der Radeinheiten des Fahrzeugs, insbesondere des Fahrrades, gemäß den Merkmalen einer der voranstehenden Ausführungsformen ausgebildet ist.

Besonders vorteilhaft ist es, wenn sowohl die vordere Radeinheit als auch die hintere Radeinheit gemäß den Merkmalen nach einem der voranstehenden Ausführungsformen ausgebildet ist.

Vorzugsweise ist dabei die Radeinheit so ausgebildet, dass diese eine Scheibenbremse, insbesondere eine hydraulisch betätigbare Scheibenbremse, aufweist.

Darüber hinaus ist vorzugsweise vorgesehen, dass das Fahrzeug, insbesondere das Fahrrad, ein Antiblockiersystem aufweist, welches mit einer den Sensorkranz und den Sensor umfassenden Sensoreinheit und der Scheibenbremse zusammenwirkt.

Ferner erfolgt der Antrieb des Fahrzeugs, insbesondere des Fahrrades, über ein muskelangetriebenes Antriebssystem, gegebenenfalls noch unterstützt durch einen Zusatzantrieb, wobei der Zusatzantrieb beispielsweise einen elektrischen Antriebsmotor umfasst.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Radeinheit (12), insbesondere für ein Fahrrad (10), umfassend ein Rad (74) mit einer Nabe (102) und einer Felge (104), welche durch Speichen (108) miteinander verbunden und um eine Drehachse (114) drehbar angeordnet sind, dadurch gekennzeichnet dass mit dem Rad (74) eine koaxial zu der Drehachse (114) angeordnete Scheibeneinheit (260) verbunden ist, die einen Bremsring (206) für eine Scheibenbremse (76) und einen Sensorkranz (262) zur Erfassung einer Drehbewegung der Radeinheit (12) trägt.
2. Radeinheit (12) nach Ausführungsform 1, dadurch gekennzeichnet, dass der Sensorkranz (262) und der Bremsring (206) in der Scheibeneinheit (260) derart relativ zueinander angeordnet sind, dass deren Mittelebenen (292, 294), in denen sich diese erstrecken, parallel zueinander verlaufen.
3. Radeinheit (12) nach Ausführungsform 1, dadurch gekennzeichnet, dass der Sensorkranz (262) und der Bremsring (206) in der Scheibeneinheit (260) derart relativ zueinander angeordnet sind, dass die Mittelebenen (292, 294), in denen sich diese erstrecken, zusammenfallen.
4. Radeinheit (12) nach einer der voranstehenden Ausführungsformen, dadurch gekennzeichnet, dass der Sensorkranz (262) radial innerhalb des Bremsrings (206) liegt.
5. Radeinheit (12) nach einer der voranstehenden Ausführungsformen, dadurch gekennzeichnet, dass die Scheibeneinheit (260) eine den Sensorkranz (262) umfassende Sensorscheibe (264) umfasst, welche mit dem Rad (74) verbunden ist und welche den Bremsring (206) trägt.
6. Radeinheit (12) nach Ausführungsform 5, dadurch gekennzeichnet, dass der Bremsring (206) durch eine Formschlussverbindung (280) mit der Sensorscheibe (264) verbunden ist.
7. Radeinheit (12) nach Ausführungsform 5, dadurch gekennzeichnet, dass die Formschlussverbindung (280) eine parallel zu einer Mittelebene (292) der Sensorscheibe (264) verlaufende und begrenzte Relativbewegung des Bremsrings (206) zur Sensorscheibe (264) zulässt.
8. Radeinheit (12) nach einer der Ausführungsformen 5 bis 7, dadurch gekennzeichnet, dass der Bremsring (206) durch Halteansätze (278), welche in Ausnehmungen eingreifen, mit der Sensorscheibe (264) verbunden ist.
9. Radeinheit (12) nach Ausführungsform 8, dadurch gekennzeichnet, dass die Ausnehmungen (332) und die Halteansätze (278) als in Drehrichtung wirksame Formschlusselemente zur drehfesten Verbindung des Bremsrings (206) mit der Sensorscheibe (264) dienen.
10. Radeinheit (12) nach Ausführungsform 8 oder 9, dadurch gekennzeichnet, dass die Halteansätze (278) und die Ausnehmungen (332) radial zwischen der Sensorscheibe (264) und dem Bremsring (206) liegend angeordnet sind.
11. Radeinheit (12) nach Ausführungsform 10, dadurch gekennzeichnet, dass die jeweilige Ausnehmung (332) mit dem jeweiligen Halteansatz (278) drehfest verbindende Formschlussflächen radial außerhalb des Sensorkranzes (262) liegen.
12. Radeinheit (12) nach Ausführungsform 11, dadurch gekennzeichnet, dass die die Ausnehmung (332) und den jeweiligen Halteansatz (278) drehfest verbindenden Formschlussflächen radial zwischen dem Sensorkranz (262) und dem Bremsring (206) liegen.
13. Radeinheit (12) nach Ausführungsform 8 oder 9, dadurch gekennzeichnet, dass die jeweilige Ausnehmung (332) und der jeweils mit dieser zusammenwirkende Halteansatz (278) sich in einen Abtastbereich (266) des Sensorkranzes (262) hinein erstrecken.
14. Radeinheit (12) nach Ausführungsform 13, dadurch gekennzeichnet, dass sich in dem sich in den Abtastbereich (266) hineinerstreckenden Teil des Halteansatzes (278) eine periodische Struktur (266) des Abtastbereichs (266) fortsetzt.
15. Radeinheit (12) nach einer der voranstehenden Ausführungsformen, dadurch gekennzeichnet, dass die Sensorscheibe (264) mit einer Nabe (102) des Rades (74) verbunden ist.
16. Radeinheit (12) nach Ausführungsform 15, dadurch gekennzeichnet, dass die Sensorscheibe (264) formschlüssig mit der Nabe (102) verbunden ist.
17. Radeinheit (12) nach Ausführungsform 16, dadurch gekennzeichnet, dass die Sensorscheibe (264) an einem auf die Nabe (102) aufgesteckten und durch Formschluss drehfest mit der Nabe (102) verbundenen Tragring (272) gehalten ist.
18. Radeinheit (12) nach einer der Ausführungsformen 1 bis 4, dadurch gekennzeichnet, dass die Scheibeneinheit (260) eine den Bremsring (206) umfassende Bremsscheibe (380) aufweist, welche mit dem Rad (74) verbunden ist, und dass der Sensorkranz (262) an der Bremsscheibe (380) gehalten ist.
19. Radeinheit (12) nach Ausführungsform 18, dadurch gekennzeichnet, dass der Sensorkranz (262) an der Bremsscheibe (380) anliegt.
20. Radeinheit (12) nach Ausführungsform 18 oder 19, dadurch gekennzeichnet, dass der Sensorkranz (262) durch Formschlusselemente mit der Bremsscheibe (380) verbunden ist.
21. Radeinheit (12) nach einer der Ausführungsformen 18 bis 20, dadurch gekennzeichnet, dass die Bremsscheibe (380) formschlüssig mit dem Rad (74) verbunden ist.
22. Radeinheit (12) nach einer der Ausführungsformen 19 bis 21, dadurch gekennzeichnet, dass die Bremsscheibe (380) mit einer Nabe (102) des Rades (74) verbunden ist.
23. Radeinheit (12) nach Ausführungsform 22, dadurch gekennzeichnet, dass die den Sensorkranz (262) mit der Bremsscheibe (380) verbindenden Formschlusselemente radial außerhalb einer Verbindung der Bremsscheibe (380) mit einer Nabe (102) des Rades (74) angeordnet sind.
24. Radeinheit (12) nach Ausführungsform 22 oder 23, dadurch gekennzeichnet, dass die Bremsscheibe an einem auf die Nabe (102) aufgesteckten und durch Formschluss drehfest mit der Nabe (102) verbundenen Tragring (272) gehalten ist.
25. Radeinheit (12) nach einer der voranstehenden Ausführungsformen, dadurch gekennzeichnet, dass das Rad (74) um eine Drehachse (114) drehbar an einer Radaufhängung (72) der Radeinheit (12) angeordnet ist.
26. Radeinheit (12) nach einer der voranstehenden Ausführungsformen, dadurch gekennzeichnet, dass der Radeinheit ein Sensor (420) zum Detektieren eines Abtastbereiches (266) des Sensorkranzes (262) zugeordnet ist.
27. Radeinheit (12) nach Ausführungsform 26, dadurch gekennzeichnet, dass der Sensor (420) an der Radaufhängung (72) angeordnet ist.
28. Radeinheit (12) nach einer der voranstehenden Ausführungsformen, dadurch gekennzeichnet, dass die Radeinheit (12) eine Bremszange (204) umfasst, welche mit dem Bremsring (206) bremsend zusammenwirkt.
29. Radeinheit (12) nach einer der Ausführungsformen 26 bis 28, dadurch gekennzeichnet, dass der Sensor (420) mit der Bremszange (204) verbunden angeordnet ist.
30. Radeinheit (12) nach Ausführungsform 28 oder 29, dadurch gekennzeichnet, dass die Bremszange (204) ihrerseits an der Radaufhängung (72) angeordnet ist.
31. Fahrzeug, insbesondere Fahrrad (10), umfassend eine vordere Radeinheit (12v) und eine hintere Radeinheit (12h), welche durch einen Rahmen (14) miteinander verbunden sind, dadurch gekennzeichnet, dass mindestens eine der Radeinheiten (12v, 12h) des Fahrzeugs, insbesondere des Fahrrades (10) nach einer der Ausführungsformen 1 bis 30 ausgebildet ist.
32. Fahrzeug nach Ausführungsform 31, dadurch gekennzeichnet, dass dieses eine Scheibenbremse, insbesondere eine hydraulisch betätigbare Scheibenbremse (76), aufweist.
33. Fahrzeug nach Ausführungsform 31 oder 32, dadurch gekennzeichnet, dass das Fahrzeug, insbesondere das Fahrrad (10) ein Antiblockiersystem (18) aufweist, welches mit einer den Sensorkranz (262) umfassenden Sensoreinheit (78) und der Scheibenbremse (76) zusammenwirkt.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels eines erfindungsgemäßen Fahrrads;
- Fig. 2: eine ausschnittsweise Seitenansicht eines ersten Ausführungsbeispiels einer erfindungsgemäßen vorderen Radeinheit für ein Fahrrad;
- Fig. 3: einen Schnitt längs Linie 3-3 in Fig. 2;
- Fig. 4: eine Seitenansicht eines ersten Ausführungsbeispiels einer erfindungsgemäßen Scheibeneinheit;
- Fig. 5: einen Schnitt längs Linie 5-5 in Fig. 4;
- Fig. 6: eine vergrößerte Darstellung eines Bereichs A in Fig. 4;
- Fig. 7: eine ausschnittsweise vergrößerte Darstellung eines Schnittes längs Linie 7-7 in Fig. 6;
- Fig. 8: einen vergrößerten Schnitt im Bereich B in Fig. 7;
- Fig. 9: eine Seitenansicht eines zweiten Ausführungsbeispiels eines erfindungsgemäßen Scheibeneinheit ähnlich Fig. 4;
- Fig. 10: eine vergrößerte Ansicht eines Bereich C in Fig. 9;
- Fig. 11: einen Schnitt längs Linie 11-11 in Fig. 10;
- Fig. 12: eine Seitenansicht eines dritten Ausführungsbeispiels einer erfindungsgemäßen Scheibeneinheit ähnlich Fig. 4;
- Fig. 13: eine vergrößerte Ansicht des Bereichs D in Fig. 12;
- Fig. 14: eine Seitenansicht des vierten Ausführungsbeispiels einer erfindungsgemäßen Scheibeneinheit;
- Fig. 15: eine ausschnittsweise vergrößerte Darstellung des Bereichs E in Fig. 14;
- Fig. 16: einen Schnitt längs Linie 16-16 in Fig. 15;
- Fig. 17: eine vergrößerte Darstellung des Bereichs F in Fig. 16 und
- Fig. 18: eine Seitenansicht eines fünften Ausführungsbeispiels einer erfindungsgemäßen Scheibeneinheit.

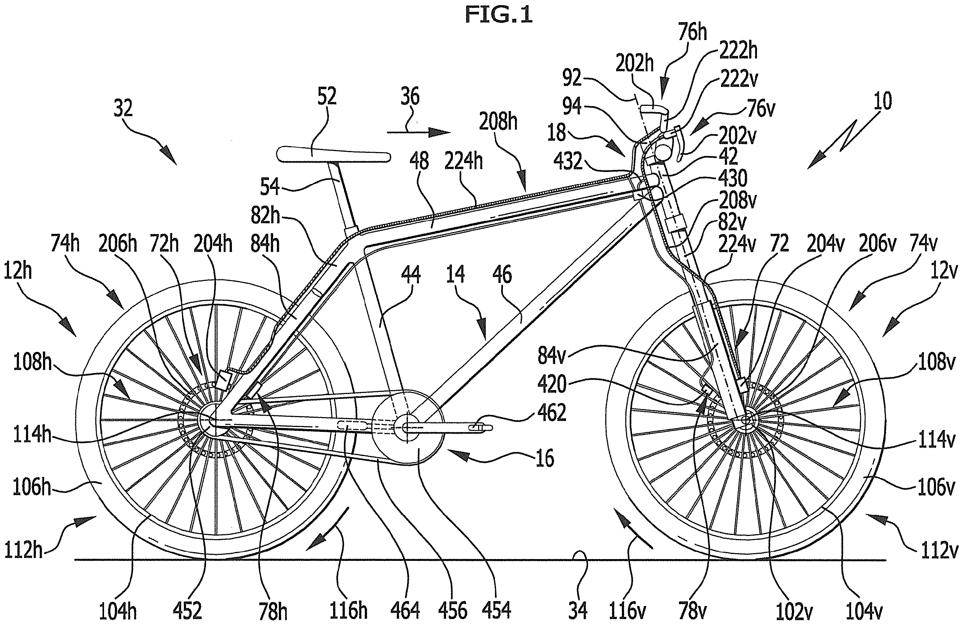

Ein in Fig. 1 beispielhaft dargestelltes und als Ganzes mit 10 bezeichnetes erstes Ausführungsbeispiel eines erfindungsgemäßen Fahrrades umfasst eine vordere Radeinheit 12v und eine hintere Radeinheit 12h, welche durch einen Rahmen 14 miteinander verbunden sind, sowie ein als Ganzes mit 16 bezeichnetes Fahrradantriebssystem, welches beispielsweise durch die Muskelkraft eines Fahrers angetrieben wird, und ein Antiblockiersystem 18.

Dabei erstreckt sich das Fahrrad 10 im Wesentlichen in einer Hauptebene 32, welche in Fig. 1 im Wesentlichen der Darstellungsebene entspricht und bei dem gemäß Fig. 1 auf einer horizontalen Standfläche 34 in Fahrbereitschaft stehenden Fahrrad 10 im Wesentlichen quer, insbesondere senkrecht zu der Standfläche 34 verläuft.

Bezogen auf eine Fahrradausrichtung 36, welche bei einer Geradeausfahrt des Fahrrads 10 der Fahrtrichtung entspricht, ist die vordere Radeinheit 12v in einem vorderen Bereich des Fahrrads 10 angeordnet und die hintere Radeinheit 12h in einem hinteren Bereich des Fahrrads 10 angeordnet.

Der Rahmen 14 umfasst ein Steuerrohr 42, an welchem die vordere Radeinheit 12v drehbar beweglich angeordnet ist, und eine hintere Strebe 44, an welcher die hintere Radeinheit 12h angeordnet ist, wobei das Steuerrohr 42 und die hintere Strebe 44 durch ein erstes Rohr 46 und beispielsweise ein weiteres, zweites Rohr 48 miteinander verbunden sind.

An den Rahmen 14 ist ferner ein Sattel 52 mit einem Sattelrohr 54 angeordnet.

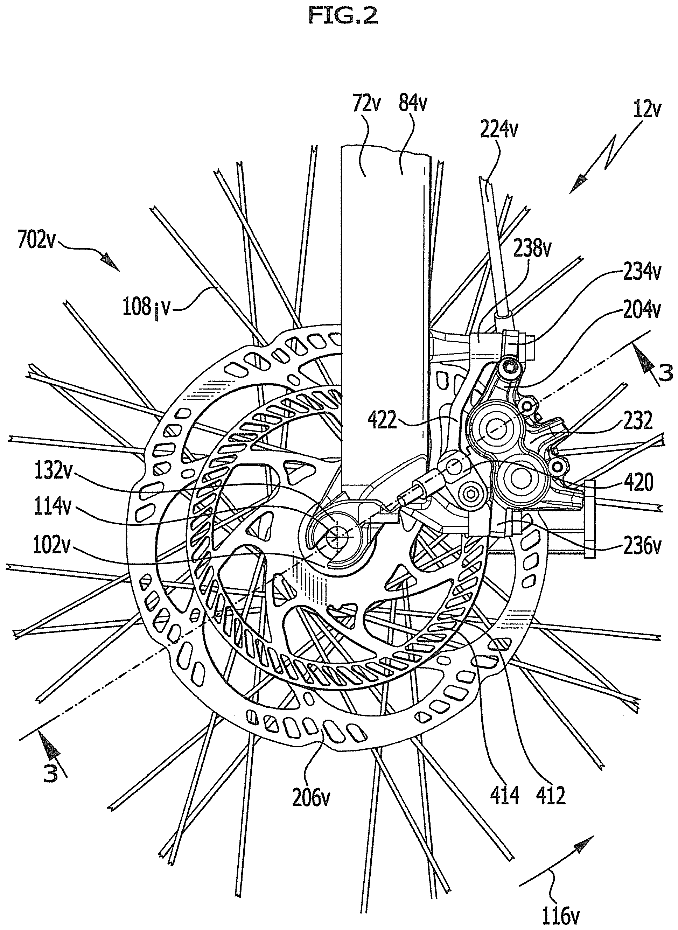

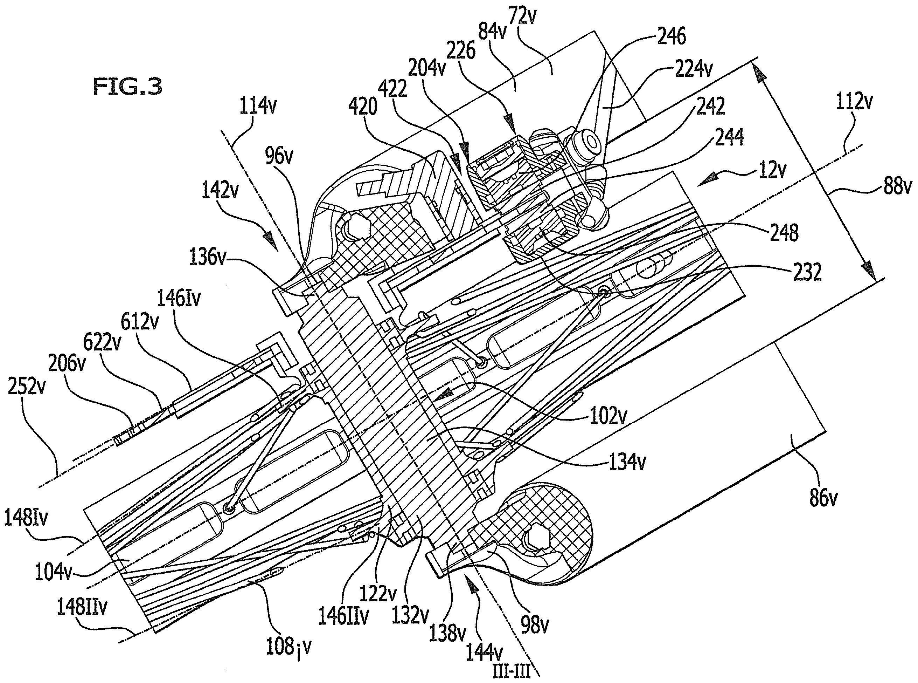

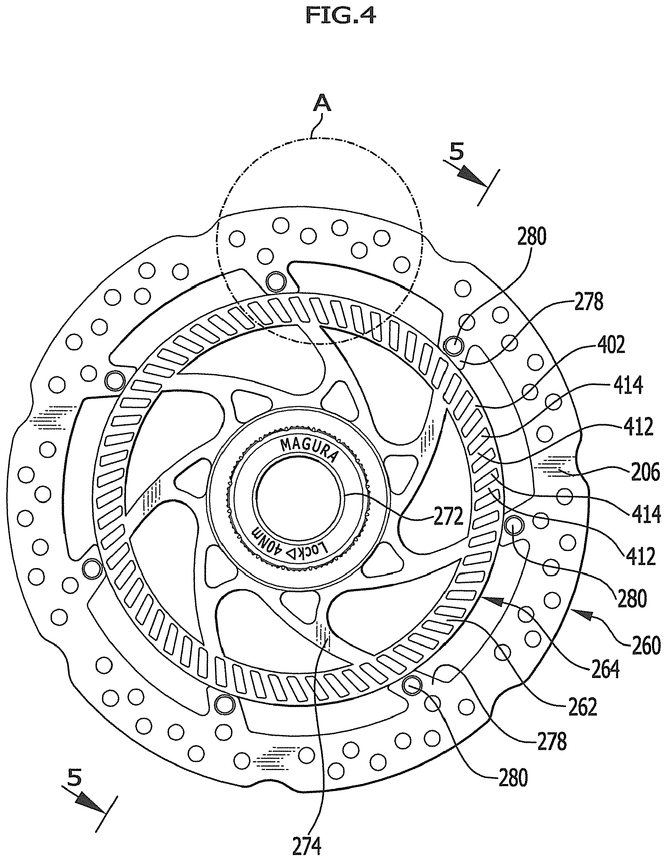

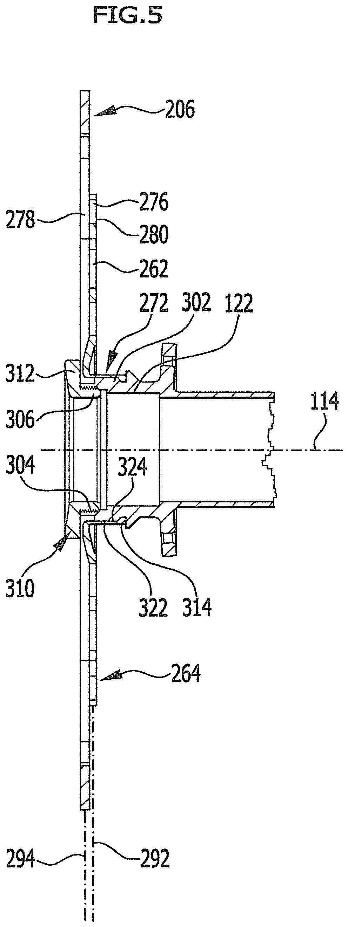

Die vordere Radeinheit 12v, welche in den Fig. 2 und 3 dargestellt ist, und die hintere Radeinheit 12h, welche in den Fig. 4 und 5 dargestellt ist, sind ähnlich aufgebaut und werden im Folgenden, soweit sie analog aufgebaut sind, gemeinsam beschrieben, wobei auf die Spezifizierung v und h, soweit diese nicht erforderlich ist, verzichtet wird.

Die Radeinheit 12 umfasst eine Radaufhängung 72, ein Rad 74, welches drehbar an der Radaufhängung 72 angeordnet ist, eine als Scheibenbremse ausgebildete Bremsvorrichtung 76, mit welcher bremsend auf das Rad 74 eingewirkt werden kann, so dass die Drehgeschwindigkeit des Rades 74 bei der bremsenden Einwirkung der Bremsvorrichtung 76 kleiner wird, sowie eine Sensoreinheit 78, mit welcher die Drehgeschwindigkeit des Rades 74 ermittelbar ist.

Die Radaufhängung 72 umfasst einen Schaft 82, ein erstes Gabelbein 84 und ein zweites Gabelbein 86, wobei die Gabelbeine 84 und 86 mit dem Schaft 82 verbunden sind.

Das erste Gabelbein 84 und das zweite Gabelbein 86 verlaufen im Wesentlichen zueinander parallel und sind mit einem Abstand 88 zueinander angeordnet, so dass das Rad 74 zwischen dem ersten Gabelbein 84 und dem zweiten Gabelbein 86 positioniert ist.

Der Schaft 82v der vorderen Radeinheit 12v ist dabei insbesondere um eine Lenkachse 92 drehbar an dem Steuerrohr 42 gelagert, so dass die vordere Radeinheit 12v mit einem Lenker 94 lenkbar ist.

Der Schaft 82h der hinteren Radeinheit 12h ist beispielsweise an den Rahmen 14, insbesondere an der hinteren Strebe 44, angeordnet.

An der Radaufhängung 72 ist ein erstes Ausfallende 96, welches beispielsweise an dem ersten Gabelbein 84 angeordnet ist, und ein zweites Ausfallende 98, welches beispielsweise an dem zweiten Gabelbein 86 angeordnet ist, zur Befestigung des Rades 74 vorgesehen.

Das Rad 74 umfasst eine Nabe 102, eine Felge 104, auf der ein luftgefüllter Reifen 106 aufgezogen ist, und mehrere Speichen 108, von denen in den Figuren nur einige Speichen 108ᵢ beispielhaft gekennzeichnet sind, wobei die Speichen 108 die Felge 104 mit der Nabe 102 verbinden.

Dabei verläuft die Felge 104 im Wesentlichen entlang eines Kreises, der in einer Radebene 112 liegt und durch dessen Mittelpunkt eine geometrische Drehachse 114 verläuft, wobei die Drehachse 114 senkrecht zu der Radebene 112 verläuft und die Radebene 112 bei Geradeausfahrt des in Fig. 1 dargestellten Fahrrads 10 mit der Hauptebene 32 zusammenfällt, jedoch die vordere Radebene 112v auch quer zu der Hauptebene 32 verlaufen kann, da das Vorderrad 14v an der um die Lenkachse 92 drehbaren vorderen Radaufhängung 72v befestigt ist.

Das Rad 74 ist, in eine Umlaufrichtung 116 drehbar um die Drehachse 114 drehbar angeordnet.

Dabei verläuft die Drehrichtung 116 im Wesentlichen in der Radebene 112 und ist stets senkrecht zu einer radialen Richtung der Drehachse 114 ausgerichtet.

Die Nabe 102 ist im Wesentlichen senkrecht zu der Radebene 112 und entlang der Drehachse 114 ausgerichtet, wie in Fig. 2 bis 7 dargestellt ist, und damit ist die Nabe 102 in der Radebene 112 zentriert zu der Felge 104 angeordnet, wie in Fig. 1 dargestellt ist.

Die Nabe 102 umfasst ein Nabengehäuse 122 das an einer Radachse 132, welche koaxial zur der Drehachse 114 ausgerichtet ist, drehbar um die Drehachse 114 gelagert ist. Dabei nimmt ein innerer Bereich 134 der Radachse 132, welcher zwischen einem ersten Endbereich 136 und einem zweiten Endbereich 138 der Radachse 132 liegt, das Nabengehäuse 122 drehbar auf und der erste Endbereich 136 und der zweite Endbereich 138 der Radachse 132 ragen aus sich gegenüberliegenden Frontseiten 142 und 144 des Nabengehäuses 122 aus diesem heraus.

Das Rad 74 ist mittels der fest mit der Radaufhängung 72 verbundenen Radachse 132 an der Radaufhängung 72 gelagert, wobei insbesondere der erste Endbereich 136 der Radachse 132 mit dem ersten Ausfallende 96 verbunden ist und der zweite Endbereich 138 der Radachse 132 mit dem zweiten Ausfallende 98 verbunden ist.

Das Nabengehäuse 122 umfasst einen ersten Ringbund 146I und einen zweiten Ringbund 146II, welche in Richtung parallel zu der Drehachse 114 versetzt zueinander angeordnet sind und mit einem jeweils gleichen Abstand zu der Radebene 112 auf unterschiedlichen Seiten der Radebene 112 liegen, so dass der erste Ringbund 146I zwischen der Radebene 112 und der Frontseite 142 positioniert ist und der zweite Ringbund 146II zwischen der Radebene 112 und der zweiten Frontseite 144 positioniert ist. Der Ringbund 146I und der Ringbund 146II sind zur Befestigung der Speichen 108 vorgesehen.

Von den Speichen 108 sind Speichen 108I an den ersten Ringbund 146I angeordnet und Speichen 108II sind an dem zweiten Ringbund 146II angeordnet, wobei die Anzahl der Speichen 108I und die Anzahl der Speichen 108II jeweils der Hälfte der Gesamtanzahl der Speichen 108 entspricht.

In den Figuren sind nur einige Speichen 108 beispielhaft gekennzeichnet.

Soweit die Ausgestaltung und Anordnung der Speichen 108I und des ersten Ringbundes 146I sowie der Speichen 108II und des zweiten Ringbundes 146II analog sind, werden diese im Folgenden gemeinsam beschrieben und auf die Spezifizierung I und II wird, soweit es möglich ist, verzichtet.

Die Speichen 108 erstrecken sich von dem jeweiligen Ringbund 146, an welchem sie befestigt sind, bis zu der Felge 104, an welcher sie ebenso befestigt sind, so dass die Felge 104 mit dem Nabengehäuse 122 relativ zu der Radachse 132 um die Drehachse 114 drehbar ist.

Die Speichen 108 verlaufen dabei jeweils im Wesentlichen in einer Speichenfläche 148, wobei in einem Bereich der Drehachse 114 die Speichenfläche 148 von der Radebene 112 maximal beabstandet ist, insbesondere mit einem Abstand, mit welchem auch der Ringbund 146 zu der Radebene 112 beabstandet ist, so dass die Speichenfläche 148 von dem Ringbund 146 ausgehend in der zu der Drehachse 114 radialen Richtung auf die Radebene 112 zu verläuft und im Bereich der Felge 104 auf die Radebene 112 trifft. Somit ist Speichenfläche 148 zu der Drehachse 114 rotationssymmetrisch ist und konusartig ausgebildet.

Dabei verlaufen die erste Speichenfläche 148I und die zweite Speichenfläche 148II im Wesentlichen spiegelsymmetrisch zur Radebene 112, so dass also die zentralen Bereiche der konusartigen Speichenflächen 148I und 148II entlang der Drehachse 114 beabstandet sind und ausgehend von der Drehachse 114 die Speichenflächen 148I und 148II aufeinander zu verlaufen.

Die Bremsvorrichtung 76 umfasst eine Betätigungseinheit 202, eine Bremszange 204, die insbesondere an der Radaufhängung 72 angeordnet ist, und einen Bremsring 206, welcher mit der Nabe 102, insbesondere mit dem Nabengehäuse 122, drehfest verbunden ist.

Dabei sind die Betätigungseinheit 202, beispielsweise ein Geberzylinder 222 mit einem Hebel, und die Bremszange 204 über ein Hydrauliksystem 208 druckübertragend verbunden, so dass durch ein Betätigen der Betätigungseinheit 202 die Bremszange 204 betätigt wird, wodurch die Bremszange 204 bremsend mit dem Bremsring 206 zusammenwirkt und somit eine Drehbewegung des Bremsrings 206 gebremst wird und da der Bremsring 206 an dem Rad 74 angeordnet ist, wird somit auch eine Drehgeschwindigkeit einer Drehbewegung des Rades 74 verringert.

Das Hydrauliksystem 208 umfasst einen Geberzylinder 222, der über eine Druckleitung 224 mit einer mit der Bremszange 204 verbundenen Nehmerzylindereinheit 226 verbunden ist.

Die Bremszange 204 umfasst ein Bremszangengehäuse 232, welches mit einer ersten Halterung 234 und einer zweiten Halterung 236 an der Radaufhängung 72, insbesondere an einem der Gabelbeine 84, 86, beispielsweise mit einem Bremszangenhalter 238, montiert ist.

Die Bremszange 204, welche vergrößert in Fig. 3 dargestellt ist, umfasst außerdem einen ersten Bremsbelag 242 und einen zweiten Bremsbelag 244, welche an dem Bremszangengehäuse 232 beweglich angeordnet sind, wobei die Bremsbeläge 242 und 244 beabstandet zueinander angeordnet sind, so dass der Bremsring 206 zwischen den Bremsbelägen 242 und 244 positionierbar ist.

Der erste Bremsbelag 242 wird von einem ersten Kolben 246 der Nehmerzylindereinheit 226 beaufschlagt und der zweite Bremsbelag 244 wird von einem zweiten Kolben 248 der Nehmerzylindereinheit 226 beaufschlagt, wobei der erste Kolben 246 und der zweite Kolben 248 mit dem Hydrauliksystem 208, insbesondere über die Druckleitung 224, verbunden sind.

Wie in Fig. 4 und 5 dargestellt, ist der Bremsring 206 Teil einer Scheibeneinheit 260, die neben dem Bremsring 206 einen gegenüber dem Bremsring 206 radial innenliegenden Sensorkranz 262 umfasst.

Insbesondere umfasst ein derartiger Sensorkranz 262 einen Abtastbereich 266 mit einer in Umlaufrichtung um die Drehachse 114 umlaufenden und in dieser Richtung periodisch variierenden Struktur 268.

Bei dem ersten Ausführungsbeispiel ist dabei der Sensorkranz 262 Bestandteil einer als Ganzes mit 264 bezeichneten Sensorscheibe, die - wie beispielsweise in Fig. 5 dargestellt, einen formschlüssig mit dem Nabengehäuse 122 verbundenen Tragring 272 umfasst, von welchem ausgehend Tragarme 274 bis zu dem Sensorkranz 262 verlaufen und einstückig in den Sensorkranz 262 übergehen.

Ferner umfasst die Sensorscheibe 264 sich auf einer den Tragarmen 274 gegenüberliegenden Seite des Sensorkranzes 262, vorzugsweise in Fortsetzung der Tragarme 274 erstreckende Haltearme 276, die überlappend zu Halteansätzen 278 des Bremsrings 206 angeordnet sind und mittels einer Nietverbindung 280 mit den Halteansätzen 278 verbunden sind.

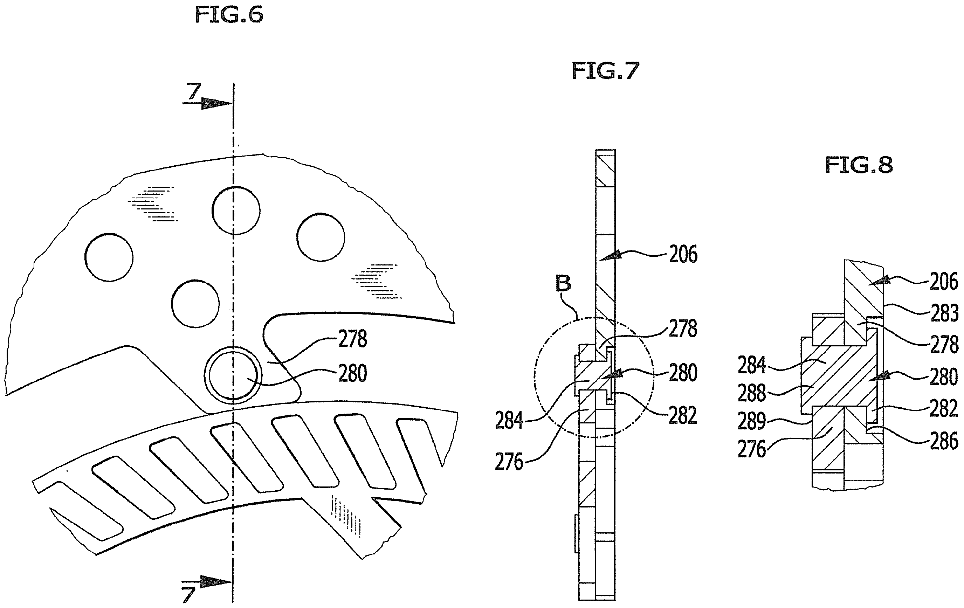

Wie in den Fig. 6, 7 und 8 dargestellt, ist die Nietverbindung 280 so ausgebildet, dass ein Nietkopf 282 eines Nietkörpers 284 in einer Vertiefung 286 des Halteansatzes 278 liegt und insbesondere nicht über eine dem Haltearm 276 abgewandte Oberfläche 283 des Halteansatzes 278 übersteht, während ein dem Nietkopf 282 gegenüberliegender Nietkopf 288, der sich an dem Haltearm 276 abstützt, über eine dem Halteansatz 278 gegenüberliegende Oberfläche 289 des Haltearms 276 übersteht, insbesondere diese übergreift.

Somit wird bei dem ersten Ausführungsbeispiel der erfindungsgemäßen Scheibeneinheit 260 der Bremsring 206 mittels der Sensorscheibe 264 gehalten und mittels dieser drehfest mit dem Nabengehäuse 122 verbunden.

Wie insbesondere in Fig. 5 dargestellt, ist dabei eine senkrecht zur Drehachse 114 verlaufende Mittelebene 292 der Sensorscheibe 264 parallel zu einer Mittelebene 294 des Bremsrings 206 ausgerichtet, die ebenfalls senkrecht zur Drehachse 114 verläuft.

Vorzugsweise sitzt bei dem ersten Ausführungsbeispiel der Tragring 272 auf einem endseitig des Nabengehäuses 122 angeordneten zylindrischen Tragansatz 302 des Nabengehäuses 122 (Fig. 5), der auf seiner der Drehachse 114 zugewandten Innenseite mit einem Gewinde 304 versehen ist, in welches ein Gewindeabschnitt 306 eines Fixierrings 310 eingreift, der mit einem radial außen liegend zum Gewindeabschnitt 306 angeordneten Druckflansch 312 den Tragring 272 derart beaufschlagt, dass dieser an einer vom Nabengehäuse 122 gebildeten Stützschulter 314 in Anlage gehalten ist.

Vorzugsweise weist der Tragansatz 302 eine radial außen liegende Verzahnung 322 auf, in welche eine innenliegende Verzahnung 324 des Tragrings 272 eingreift und dadurch drehfest mit dem Nabengehäuse 122 verbunden ist.

Ferner erfolgt die präzise Ausrichtung des Tragrings 272 und somit auch der Sensorscheibe 264 relativ zur Drehachse 114 dadurch, dass der Tragring 272 zwischen der Stützschulter 314 und dem Druckflansch 312 fixiert ist, die den Tragring 272 so ausrichten, dass die insbesondere einteilig mit diesem verbundene Sensorscheibe 264 sich mit ihrer Mittelebene 292 senkrecht zur Drehachse 114 erstreckt.

Dadurch wird zwangsläufig auch der mittels der Nietverbindung 280 mit der Sensorscheibe 264 verbundene Bremsring 206 mit seiner Mittelebene 294 ebenfalls so ausgerichtet, dass die Mittelebene 294 senkrecht zur Drehachse 114 verläuft.

Der Vorteil der erfindungsgemäßen Lösung ist dabei darin zu sehen, dass die Sensorscheibe 264 mit dem Tragring 272 in einfacher Weise, insbesondere als einstückiges Teil, beispielsweise durch Umformen, hergestellt und hinsichtlich der Stabilität optimiert werden kann, und durch den separat herstellbaren Bremsring 206 das Material des Bremsrings 206 unabhängig vom Material der Sensorscheibe 264 gewählt werden kann, wobei die Nietverbindung 280 eine einfache, weder das Material, insbesondere das Gefüge, des Bremsrings 206 noch das Material, insbesondere das Gefüge, der Sensorscheibe 264 beeinflussende Verbindung darstellt.

Damit lässt sich der Bremsring 206 entsprechend den hohen Materialienforderungen für einen Bremsring herstellen, während andererseits die Sensorscheibe 264 zusammen mit dem Tragring 272 als Teil, insbesondere als einstückiges Teil, hergestellt werden können, dessen Material unabhängig von dem Material gewählt werden kann, das für den Bremsring erforderlich ist, um die erforderlichen Oberflächeneigenschaften des Bremsrings 206 bei der Bremswirkung zu gewährleisten.

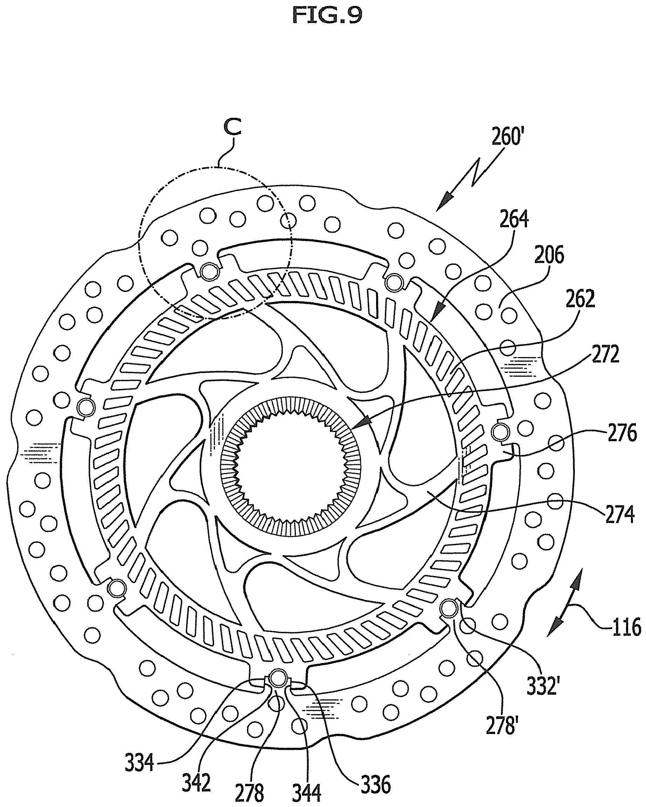

Bei einem zweiten Ausführungsbeispiel einer erfindungsgemäßen Scheibeneinheit 260', dargestellt in Fig. 9, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel sind die an der Sensorscheibe 264 angeordneten und sich radial über den Sensorkranz 262 hinaus erstreckenden Haltearme 276 zum Bremsring 206 hin offenen Ausnehmungen 332 versehen, in welche die Halteansätze 278' des Bremsrings 206 eingreifen, und zwar so, dass die Halteansätze 278' mit ihren in der Drehrichtung 116 einander gegenüberliegenden Seitenflächen 334, 336 zwischen einander zugewandten Seitenflächen 342 und 344 der Ausnehmungen 332 liegen und somit bereits über das Zusammenwirken der Seitenflächen 342 und 344 der Ausnehmungen 332 mit den an diesen anliegenden Seitenflächen 334 und 336 der Halteansätze 278' eine formschlüssige Drehmitnahme zwischen der Sensorscheibe 264 und dem Bremsring 206 erfolgt.

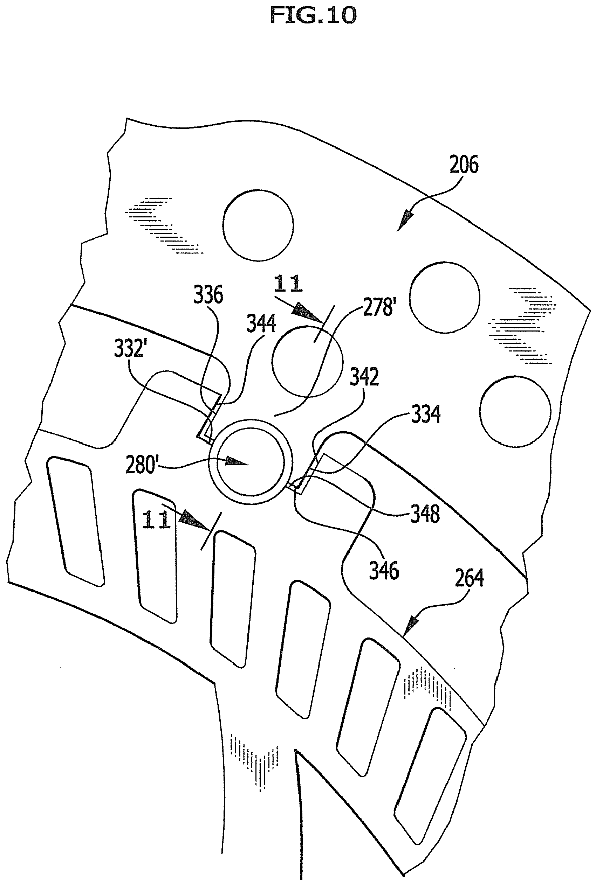

Wie ferner in Fig. 10 erkennbar, greift der jeweilige Halteansatz 278' in radialer Richtung nicht so weit in die Ausnehmung 332 ein, dass dessen radial innenliegende Endflächen 346 an den radial außenliegenden Grundflächen 348 der Ausnehmung 332 anliegen, sondern dass zwischen diesen ein geringes radiales Spiel zwischen der Sensorscheibe 264 und dem Bremsring 206 verbleibt.

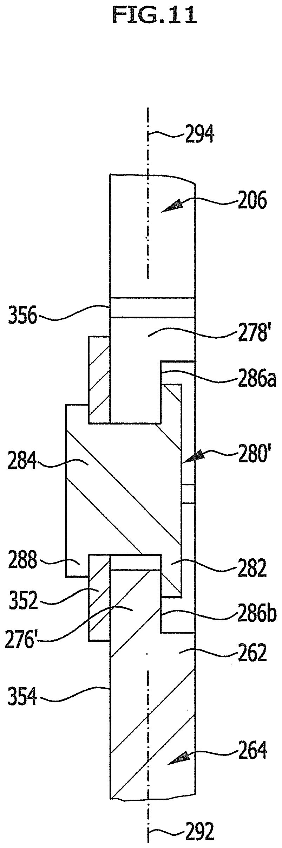

Ferner fallen bei dem zweiten Ausführungsbeispiel, wie in Fig. 11 dargestellt, die Mittelebene 292 der Sensorscheibe 264 und die Mittelebene 294 des Bremsrings 206 zusammen, so dass die Mittelebene 294 des Bremsrings 206 mit der Mittelebene 292 des Sensorkranzes 262 und der Sensorscheibe 264 fluchtet, und damit die Seitenflächen 334 und 336 der Halteansätze 278 mit den Seitenflächen 342 und 344 der jeweiligen Ausnehmung 332 zusammenwirken.

Eine derartige Ausrichtung des Bremsrings 206 relativ zur Sensorscheibe 264 und zum Sensorkranz 262 erfolgt, wie in Fig. 11 dargestellt, durch eine Nietverbindung 280' bei welcher der Nietkopf 282 in jeweils halbseitigen Vertiefungen 286a des jeweiligen Halteansatzes 278' und Vertiefungen 286b des jeweiligen Haltearms 276 liegt, während der Nietkopf 288 des Nietkörpers 284 eine Scheibe 352 beaufschlagt, die jeweils auf in dieselbe Richtung weisenden Oberflächen 354 des jeweiligen Haltearms 276 und auf Oberflächen 356 des jeweiligen Halteansatzes 278' aufliegt, so dass die Nietverbindung 280' insgesamt zu einer Ausrichtung des Bremsrings 206 relativ zur Sensorscheibe 264 führt, bei welcher die Mittelebenen 292 und 294 derselben zusammenfallen, jedoch eine Bewegung parallel zu diesen Mittelebenen 292 und 294 im Rahmen des Spiels zwischen den Endflächen 346 der Halteansätze 278 und der Grundflächen 348 der Ausnehmungen 332 zugelassen ist.

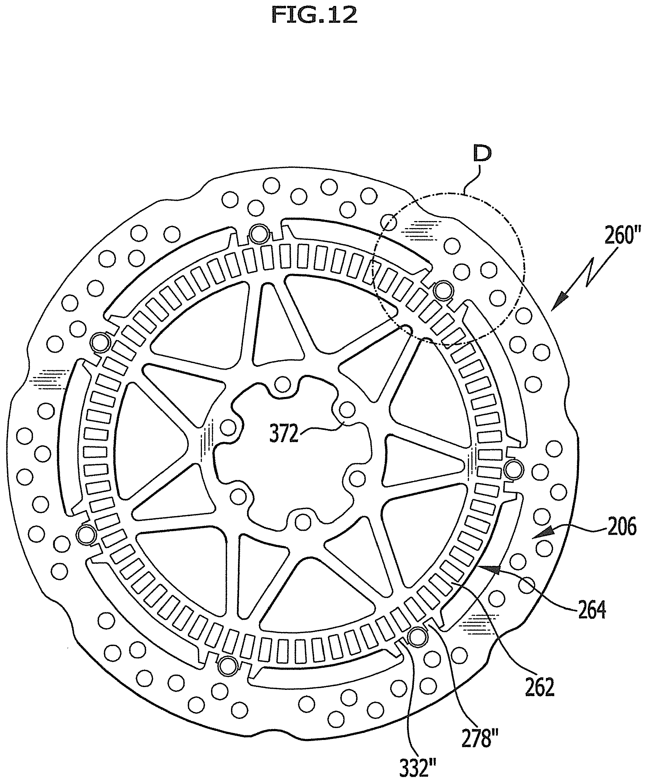

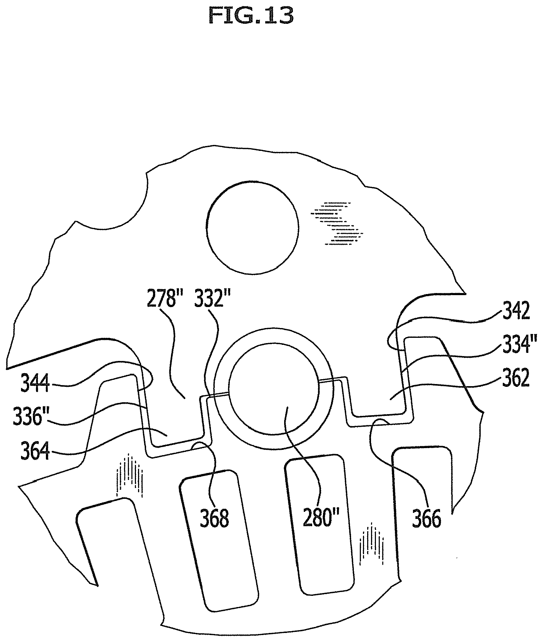

Bei einem dritten Ausführungsbeispiel einer erfindungsgemäßen Scheibeneinheit 260", dargestellt in Fig. 12 und 13, sind diejenigen Elemente, die mit denen der voranstehenden Ausführungsbeispiele identisch sind, mit denselben Bezugszeichen versehen, so dass hinsichtlich der Beschreibung vollinhaltlich auf die Ausführungen zu diesen Ausführungsbeispielen verwiesen werden kann.

Im Gegensatz zu den voranstehenden Ausführungsbeispielen, insbesondere im Gegensatz zum zweiten Ausführungsbeispiel, umfasst jeder der Halteansätze 278" zwei radial innenliegende und radial nach innen weisende Klauen 362 und 364 die in entsprechende Aussparungen 366 und 368 der Ausnehmung 332" eingreifen, um eine größere radiale Ausdehnung der Seitenflächen 334" und 336" und eine entsprechende größere Ausdehnung der Seitenflächen 342 und 344 der Ausnehmung 332" realisieren zu können.

Ferner ist die Nietverbindung 280" in gleicher Weise ausgebildet, wie die Nietverbindung 280' des zweiten Ausführungsbeispiels, so dass insbesondere die Mittelebene 294 des Bremsrings 206 und die Mittelebene 292 der Sensorscheibe 264 zusammenfallen, in gleicher Weise wie dies im Zusammenhang mit dem zweiten Ausführungsbeispiel beschrieben wurde.

Im Gegensatz zum ersten und zweiten Ausführungsbeispiel ist allerdings bei dem dritten Ausführungsbeispiel, insbesondere dargestellt in Fig. 12, kein Tragring 272 vorgesehen, sondern lediglich ein Tragflansch 372, welcher beispielsweise Schraubverbindungen oder Nietverbindungen mit einem nachfolgend beschriebenen Montageflansch des Nabengehäuses 122 erlaubt.

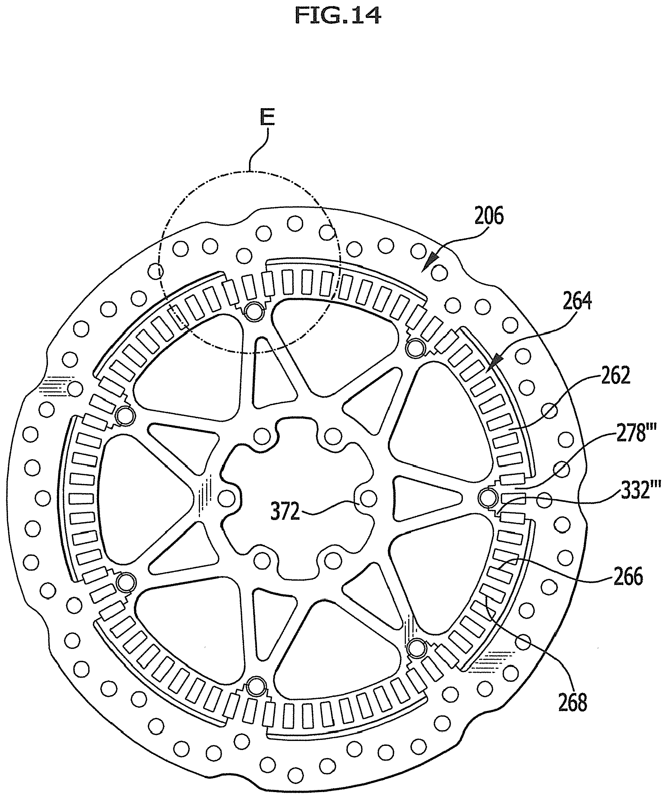

Bei einem vierten Ausführungsbeispiel, dargestellt in den Fig. 14 bis 17 sind ebenfalls diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen verwiesen werden kann.

Im Gegensatz zum zweiten und dritten Ausführungsbeispiel erstrecken sich die Halteansätze 278'" in radialer Richtung derart tief in die Sensorscheibe 264 hinein, dass die jeweiligen Ausnehmungen 332'" zur Aufnahme der Halteansätze 278'" auch den Sensorkranz 262 durchsetzen.

Insbesondere erstrecken sich die Halteansätze 278'" durch den Abtastbereich 266 hindurch, wobei die periodisch variierende Struktur 268 sich auch im Bereich der Halteansätze 278'" unterbrechungsfrei fortsetzt.

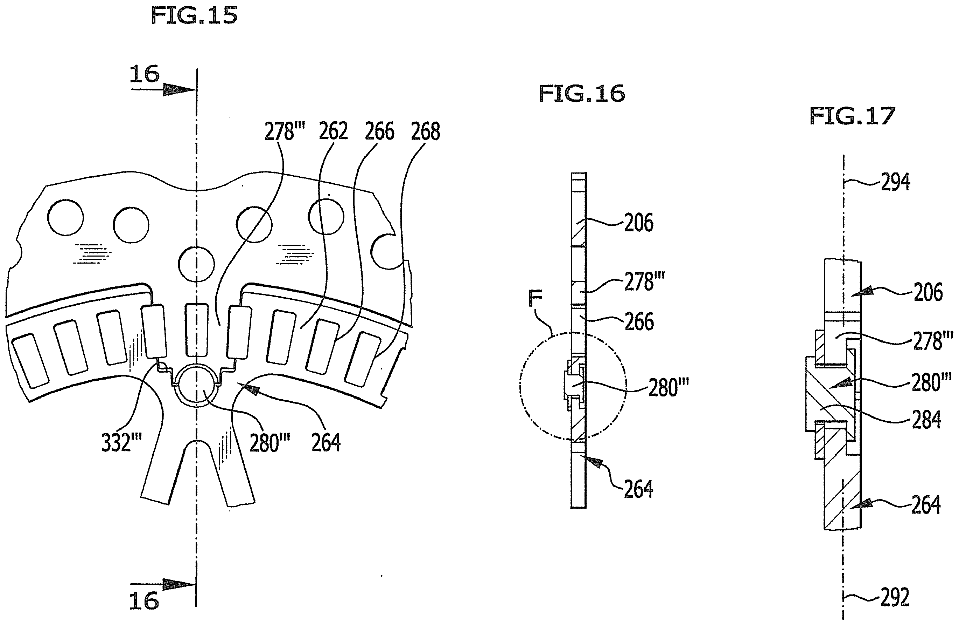

Auch in diesem Fall sind, wie in den Fig. 15 bis 17 dargestellt, die Halteansätze 278'" so relativ zu den Ausnehmungen 332'" angeordnet, dass die Mittelebene 292 der Sensorscheibe 264 und die Mittelebene 294 des Bremsrings 206 zusammenfallen und durch die Nietverbindung 280'" der Bremsring 206 mit seiner Mittelebene 294 in der bei diesen Ausführungsbeispielen beschriebenen Ausrichtung gehalten wird, allerdings auch in gleicher Weise wie beim zweiten und dritten Ausführungsbeispiel der Bremsring 206 relativ zur Sensorscheibe 264 aufgrund des radialen Spiels schwimmend zur Sensorscheibe 264 angeordnet und geführt ist, und zwar durch die Nietverbindung 280"', die in gleicher Weise wie bei dem zweiten und dritten Ausführungsbeispiel ausgebildet ist.

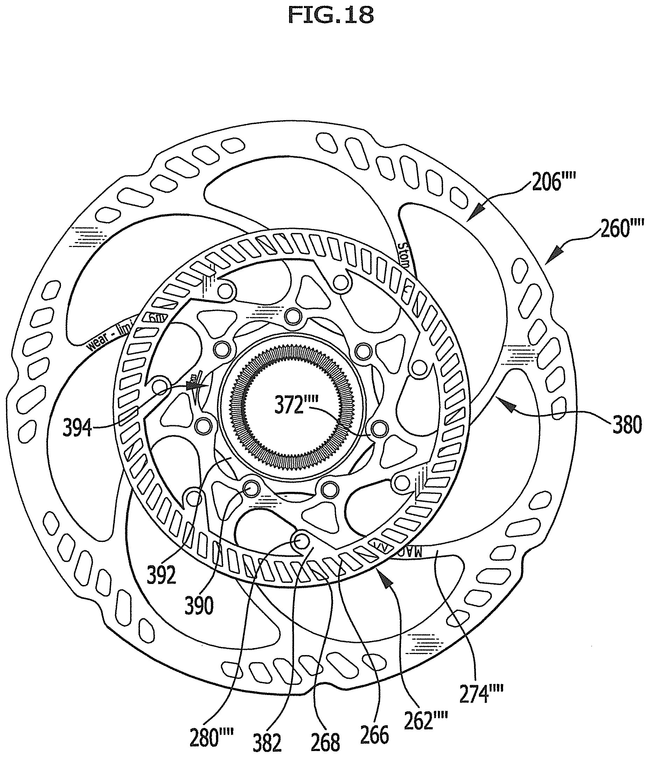

Bei einem fünften Ausführungsbeispiel, dargestellt in Fig. 18, sind diejenigen Elemente, die mit denen der voranstehenden Ausführungsbeispiele identisch sind, mit denselben Bezugszeichen versehen, wie bei den voranstehenden Ausführungsbeispielen, so dass auf die Ausführungen zu den voranstehenden Ausführungsbeispielen vollinhaltlich Bezug genommen werden kann.

Im Gegensatz zu den voranstehenden Ausführungsbeispielen ist bei dem fünften Ausführungsbeispiel der Bremsring 206"" Teil einer als Ganzes mit 380 bezeichneten Bremsscheibe, die in diesem Fall mit einem Tragflansch 372"" versehen ist, von welchem ausgehend sich dann Tragarme 274"" zu dem Bremsring 206"" erstrecken.

Im Gegensatz zu den voranstehenden Ausführungsbeispielen ist bei diesem Ausführungsbeispiel der Sensorkranz 262"" mit dem Abtastbereich 266 und der periodischen Struktur 268 nicht Teil einer Sensorscheibe, sondern mit Halteansätzen 382 versehen, die über Nietverbindungen 280"" mit der Bremsscheibe 380 verbunden und somit von der Bremsscheibe 380 gehalten sind.

Die Nietverbindungen 280"" unterscheiden sich jedoch von Nietverbindungen 390, mit welchen der Tragflansch 372"" mit einem Montageflansch 392 verbunden ist, der Teil eines Tragrings 394 ist, welcher in gleicher Weise wie der Tragring 272 des ersten und zweiten Ausführungsbeispiels an dem Nabengehäuse 122 fixierbar ist.

Vorzugsweise liegen dabei die Nietverbindungen 280"" radial außerhalb der Nietverbindungen 390, so dass dadurch die Möglichkeit besteht, die Nietverbindungen 390 im Hinblick auf die beim Bremsen erforderlichen Kräfte auszulegen, die zwischen dem Nabengehäuse 122 und dem Bremsring 206"" wirksam sind, während die Nietverbindungen 280"" lediglich so ausgelegt werden müssen, dass eine zuverlässige Positionierung des Sensorkranzes 262 relativ zum Nabengehäuse 122 und ein Mitdrehen desselben mit dem Nabengehäuse 122 erfolgt.

Insbesondere ist bei allen vorstehend beschriebenen Ausführungsbeispielen die periodisch variierende Struktur 268 als eine gezahnte Struktur ausgebildet, wobei die gezahnte Struktur in einer Umlaufrichtung um die Drehachse 114 längs des Abtastbereichs 266 umläuft.

Dabei wird die gezahnte Struktur durch Zähne 402 gebildet, welche im Wesentlichen auch in der Mittelebene 292 des Sensorkranzes 262 liegen und insbesondere geneigt zu einer zur Drehachse 114 radialen Richtung verlaufen, wobei insbesondere die Ausrichtung der Zähne 402 näherungsweise der Ausrichtung der Tragarme 274 der Sensorscheibe 264 oder der Bremsscheibe 380 zu der zur Drehachse 114 radialen Richtung angepasst ist.

Die Zähne 402 sind vorzugsweise längs einer Erstreckungsrichtung langgestreckt ausgebildet, wobei die Erstreckungsrichtung ebenfalls schräg zu der zur Drehachse 114 radialen Richtung orientiert ist.

Die Zähne 402 werden insbesondere durch Materialbrücken 412 gebildet, wobei zwischen jeder der Materialbrücken 412 ein Durchbruch 414 angeordnet ist.

Dabei sind die Materialbrücken 412 und die Durchbrüche 414 entlang der Umlaufrichtung um die Drehachse 114 periodisch alternierend angeordnet und bilden damit eine bezüglich der Drehachse 114 drehsymmetrische Anordnung, wobei die Ausdehnung aller Materialbrücken 412 in der Umlaufrichtung identisch ist und auch die der Anzahl der Materialbrücken 412 entsprechende Ausbildung aller Durchbrüche 414 in der Umlaufrichtung dieselbe ist.

Vorzugsweise verlaufen die Materialbrücken 412 als auch die Durchbrüche 414 längs einer Erstreckungsrichtung, die zu einer zur Drehachse 114 radialen Richtung geneigt ist.

Die Materialbrücken 412 sind magnetfeldbeeinflussend ausgebildet, beispielsweise aus einem das Magnetfeld stark beeinflussenden Material.

Somit bildet die periodisch variierende Abfolge von Materialbrücken 412, die magnetfeldbeeinflussend sind, und Durchbrüchen 414, die das Magnetfeld schwach, wenn nicht gar nicht beeinflussen, eine ein Magnetfeld periodisch unterschiedlich stark beeinflussende Struktur, wobei die Stärke der Magnetfeldbeeinflussung sich bei einem Übergang von einer der Materialbrücken 412 zu einem der Durchbrüche 414 sprunghaft ändert.

Die periodisch variierende Struktur 268 wird durch einen Sensor 420 erfasst.

Der Sensor 420 ist beispielsweise ein magnetfelddetektierender Sensor, wobei der magnetfelddetektierende Sensor 420 selbst ein Magnetfeld erzeugt und die Beeinflussung dieses Magnetfeldes detektiert.

Hierzu weist beispielsweise der Sensor 420 einen Hall-Sensor auf, der den Einfluss der sich abwechselnden Materialbrücken 412 und Durchbrüche 414 aufgrund deren unterschiedlicher Beeinflussung des Magnetfeldes detektiert und somit unterschiedlich große Hall-Spannungen liefert.

Vorzugsweise ist der Sensor 420 durch einen mit der Radeinheit 12, beispielsweise mit dem Bremszangenhalter 238, verbundenen Sensorhalter 422 gehalten.

Der Sensor 420 ist dem Abtastbereich 266 zugeordnet, so dass ein abgetasteter Teilbereich des Abtastbereiches 266 nicht weiter als die Reichweite des Sensors 420 von dem Sensor 420 entfernt ist und somit dieser Teilbereich des Abtastbereiches 266 zuverlässig von dem Sensor 420 erfasst wird.

Das Antiblockiersystem 18 umfasst eine Steuerungseinheit 430, welche mit den Sensoreinheiten 78v und 78h der vorderen und hinteren Radeinheiten 12v und 12h signalübertragend verbunden ist, und eine Druckregulierungseinheit 432, welche mit dem Hydrauliksystem 208v der vorderen Radeinheit 12v, und bei einer Variante in analoger Weise mit dem Hydrauliksystem 208h der hinteren Radeinheit 12h, den Druck in dem Hydrauliksystem 208 regulierbar verbunden ist, wobei die Steuerungseinheit 430 die Druckregulierungseinheit 432 in Abhängigkeit der gemessenen Drehgeschwindigkeiten des Vorderrades 74v und des Hinterrades 74h, welche von den Sensoreinheiten 78 ermittelt werden und an die Steuerungseinheit 430 übermittelt werden, steuert.

Die Steuerungseinheit 430 des Antiblockiersystems 18 ermittelt aus den von den Sensoreinheiten 78v und 78h übertragenen Drehgeschwindigkeiten der Räder 74v und 74h die Differenz der beiden Drehgeschwindigkeiten der Räder 74 und ermittelt daraus, beispielsweise bei einer zu großen Abweichung der beiden Drehgeschwindigkeiten relativ zueinander, ob eines der Räder 74 blockiert ist, also seine Drehgeschwindigkeit, verglichen mit der Drehgeschwindigkeit des anderen Rades 74, erheblich kleiner ist, wobei die Blockierung durch eine starke Betätigung der Betätigungseinheit 202 der Bremsvorrichtung 76 und eine daraus resultierende starke Bremseinwirkung der Bremszange 204 auf den Bremsring 206, beispielsweise auf die Bremsscheibe, und somit auf das Rad 74 hervorgerufen ist.

Hat die Steuerungseinheit 430 ein Blockieren des Rades 74 ermittelt, steuert sie die Druckregulierungseinheit 432 an, worauf die Druckregulierungseinheit 432 den Druck in dem Hydrauliksystem 208 der Bremsvorrichtung 76 vermindert, beispielsweise dadurch, dass die Druckregulierungseinheit 432 Hydraulikflüssigkeit aus dem Hydrauliksystem 208 teilweise in einen Zwischenspeicher umleitet.

Durch die Druckverminderung in dem Hydrauliksystem 208, welche von der Druckregulierungseinheit 432 veranlasst ist, beaufschlagen die Kolben 246 und 248 die Bremsbeläge 242 und 244 weniger stark und folglich pressen die Bremsbeläge 242 und 244 weniger stark auf den Bremsring 206, beispielsweise auf die Bremsscheibe, so dass die Reibung an denselben nachlässt und die Blockierung des Rades 74 gelöst wird und das Rad 74 wieder rollt.

Das Fahrradantriebsystem 16 umfasst beispielsweise einen Zahnkranz 452, welcher an das Nabengehäuse 122h der hinteren Radeinheit 12h angeordnet ist, ein Kettenblatt 454 und eine Kette 456, welche zwischen dem Zahnkranz 452 und dem Kettenblatt 454 gespannt ist, so dass eine Drehbewegung von dem Kettenblatt 454 durch die Kette 456 auf den Zahnkranz 452 übertragen wird, sowie Pedale 462 und 464, wie in Fig. 1 dargestellt ist.

Bei einem weiteren Ausführungsbeispiel umfasst das Fahrradantriebssystem 16 noch einen zusätzlichen Elektromotor.

## Patentansprüche

1. Radeinheit (12), insbesondere für ein Fahrrad (10), umfassend ein Rad (74) mit einer Nabe (102) und einer Felge (104), welche durch Speichen (108) miteinander verbunden und um eine Drehachse (114) drehbar angeordnet sind,
**dadurch gekennzeichnet, dass** mit dem Rad (74) eine koaxial zu der Drehachse (114) angeordnete Scheibeneinheit (260) verbunden ist, die einen Bremsring (206) für eine Scheibenbremse (76) und einen Sensorkranz (262) zur Erfassung einer Drehbewegung der Radeinheit (12) trägt.

2. Radeinheit (12) nach Anspruch 1, **dadurch gekennzeichnet, dass** der Sensorkranz (262) und der Bremsring (206) in der Scheibeneinheit (260) derart relativ zueinander angeordnet sind, dass deren Mittelebenen (292, 294), in denen sich diese erstrecken, parallel zueinander verlaufen.

3. Radeinheit (12) nach Anspruch 1, **dadurch gekennzeichnet, dass** der Sensorkranz (262) und der Bremsring (206) in der Scheibeneinheit (260) derart relativ zueinander angeordnet sind, dass die Mittelebenen (292, 294), in denen sich diese erstrecken, zusammenfallen.

4. Radeinheit (12) nach einem der voranstehenden Ansprüche, **dadurch gekennzeichnet, dass** der Sensorkranz (262) radial innerhalb des Bremsrings (206) liegt.

5. Radeinheit (12) nach einem der voranstehenden Ansprüche, **dadurch gekennzeichnet, dass** die Scheibeneinheit (260) eine den Sensorkranz (262) umfassende Sensorscheibe (264) umfasst, welche mit dem Rad (74) verbunden ist und welche den Bremsring (206) trägt, dass insbesondere der Bremsring (206) durch eine Formschlussverbindung (280) mit der Sensorscheibe (264) verbunden ist, dass insbesondere die Formschlussverbindung (280) eine parallel zu einer Mittelebene (292) der Sensorscheibe (264) verlaufende und begrenzte Relativbewegung des Bremsrings (206) zur Sensorscheibe (264) zulässt.

6. Radeinheit (12) nach dem voranstehenden Anspruch, **dadurch gekennzeichnet, dass** der Bremsring (206) durch Halteansätze (278), welche in Ausnehmungen eingreifen, mit der Sensorscheibe (264) verbunden ist, dass insbesondere die Ausnehmungen (332) und die Halteansätze (278) als in Drehrichtung wirksame Formschlusselemente zur drehfesten Verbindung des Bremsrings (206) mit der Sensorscheibe (264) dienen, dass insbesondere die Halteansätze (278) und die Ausnehmungen (332) radial zwischen der Sensorscheibe (264) und dem Bremsring (206) liegend angeordnet sind.

7. Radeinheit (12) nach dem voranstehenden Anspruch, **dadurch gekennzeichnet, dass** die jeweilige Ausnehmung (332) mit dem jeweiligen Halteansatz (278) drehfest verbindende Formschlussflächen radial außerhalb des Sensorkranzes (262) liegen, dass insbesondere die die Ausnehmung (332) und den jeweiligen Halteansatz (278) drehfest verbindenden Formschlussflächen radial zwischen dem Sensorkranz (262) und dem Bremsring (206) liegen.

8. Radeinheit (12) nach Anspruch 6, **dadurch gekennzeichnet, dass** die jeweilige Ausnehmung (332) und der jeweils mit dieser zusammenwirkende Halteansatz (278) sich in einen Abtastbereich (266) des Sensorkranzes (262) hinein erstrecken, dass insbesondere sich in dem sich in den Abtastbereich (266) hineinerstreckenden Teil des Halteansatzes (278) eine periodische Struktur (266) des Abtastbereichs (266) fortsetzt.

9. Radeinheit (12) nach einem der voranstehenden Ansprüche, **dadurch gekennzeichnet, dass** die Sensorscheibe (264) mit einer Nabe (102) des Rades (74) verbunden ist, dass insbesondere die Sensorscheibe (264) formschlüssig mit der Nabe (102) verbunden ist, dass insbesondere die Sensorscheibe (264) an einem auf die Nabe (102) aufgesteckten und durch Formschluss drehfest mit der Nabe (102) verbundenen Tragring (272) gehalten ist.

10. Radeinheit (12) nach einem der Ansprüche 1 bis 4, **dadurch gekennzeichnet, dass** die Scheibeneinheit (260) eine den Bremsring (206) umfassende Bremsscheibe (380) aufweist, welche mit dem Rad (74) verbunden ist, und dass der Sensorkranz (262) an der Bremsscheibe (380) gehalten ist, dass insbesondere der Sensorkranz (262) an der Bremsscheibe (380) anliegt, dass insbesondere der Sensorkranz (262) durch Formschlusselemente mit der Bremsscheibe (380) verbunden ist, dass insbesondere die Bremsscheibe (380) formschlüssig mit dem Rad (74) verbunden ist.

11. Radeinheit (12) nach dem voranstehenden Anspruch, **dadurch gekennzeichnet, dass** die Bremsscheibe (380) mit einer Nabe (102) des Rades (74) verbunden ist, dass insbesondere die den Sensorkranz (262) mit der Bremsscheibe (380) verbindenden Formschlusselemente radial außerhalb einer Verbindung der Bremsscheibe (380) mit einer Nabe (102) des Rades (74) angeordnet sind, dass insbesondere die Bremsscheibe an einem auf die Nabe (102) aufgesteckten und durch Formschluss drehfest mit der Nabe (102) verbundenen Tragring (272) gehalten ist.

12. Radeinheit (12) nach einem der voranstehenden Ansprüche, **dadurch gekennzeichnet, dass** die Nabe (102) des Rades (74) um eine Drehachse (114) drehbar an einer Radaufhängung (72) der Radeinheit (12) angeordnet ist.

13. Radeinheit (12) nach einem der voranstehenden Ansprüche, **dadurch gekennzeichnet, dass** der Radeinheit ein Sensor (420) zum Detektieren eines Abtastbereiches (266) des Sensorkranzes (262) zugeordnet ist, dass insbesondere der Sensor (420) an der Radaufhängung (72) angeordnet ist.

14. Radeinheit (12) nach einem der voranstehenden Ansprüche, **dadurch gekennzeichnet, dass** die Radeinheit (12) eine Bremszange (204) umfasst, welche mit dem Bremsring (206) bremsend zusammenwirkt, dass insbesondere der Sensor (420) mit der Bremszange (204) verbunden angeordnet ist, dass insbesondere die Bremszange (204) ihrerseits an der Radaufhängung (72) angeordnet ist.

15. Fahrzeug, insbesondere Fahrrad (10), umfassend eine vordere Radeinheit (12v) und eine hintere Radeinheit (12h), welche durch einen Rahmen (14) miteinander verbunden sind, **dadurch gekennzeichnet, dass** mindestens eine der Radeinheiten (12v, 12h) des Fahrzeugs (10) nach einem der Ansprüche 1 bis 14 ausgebildet ist, dass insbesondere das Fahrzeug eine Scheibenbremse, insbesondere eine hydraulisch betätigbare Scheibenbremse (76), aufweist, dass insbesondere das Fahrzeug (10) ein Antiblockiersystem (18) aufweist, welches mit einer den Sensorkranz (262) und insbesondere den Sensor umfassenden Sensoreinheit (78) und der Scheibenbremse (76) zusammenwirkt.
